# EUROPEAN PATENT APPLICATION

(11) **EP 2 958 030 A1**
(43) Date of publication of application: **23.12.2015**
(21) Application number: 15166497.6
(22) Date of filing: 28.10.2005
(51) Int. Cl.: G06F 17/30

(54) **SEARCH SYSTEM AND METHODS WITH INTEGRATION OF USER JUDGMENTS INCLUDING TRUST NETWORKS**

(30) Priority: 28.10.2004 US 623282 P
(62) Divisional of application: 05824849.3
(71) Applicant: Yahoo! Inc., Sunnyvale, CA 94089 (US)
(72) Inventor: Lu, Qi, Saratoga, CA 95070 (US); Walther, Eckart, Palo Alto, CA 94303 (US); Ku, David, Palo Alto, CA 94031 (US); Tam, Chung-Man, San Francisco, CA 94133 (US); Lee, Kevin, East Palo Alto, CA 94343 (US); Xu, Zhichen, San Jose, CA 95129 (US); Berkhin, Pavel, Sunnyvale, CA 94087 (US); Awadallah, Amr A., Palo Alto, CA 94303 (US); Diab, Ali, Menlo Park, CA 94025 (US)
(74) Representative: Boult Wade Tennant

(57) **Abstract**

Search systems and methods incorporate user judgment information regarding various pages or sites. This information may include judgments from the querying user as well as from other users selected by the querying user as members of his or her "trust network." When a query is received from a user, the list of hits related to the query can be modified based on a user judgment previously provided by the user as well as other user judgments previously provided by members of a trust network defined by the querying user. The user can construct a trust network from social network data representing the user's relationships to other users.

## Description

### CROSS-REFERENCES TO RELATED APPLICATIONS

The present disclosure is related to the following commonly-assigned co-pending U.S. patent applications:
- Provisional Application No. 60/553,577, filed March 15, 2004, entitled "Search Systems and Methods with Integration of User Judgments Including Trust Networks";
- Application No. 10/812,719, filed March 29, 2004, entitled "Search Using Graph Colorization and Personalized Bookmark Processing";
- Application No. 10/942,335(Attorney Docket No. 017887-015000US), filed September 15,2004, entitled "Automatic Updating of Trust Networks in Recommender Systems"; and
- Provisional Application No. 60/614,232 (Attorney Docket No. 017887-013710US), filed September 28, 2004, entitled "Search Systems and Methods with Integration of User Judgments."

The respective disclosures of these applications are incorporated herein by reference for all purposes.

### BACKGROUND OF THE INVENTION

The present invention relates in general to searching a corpus of documents, and in particular to search systems and methods with integration of trusted user judgments.

The World Wide Web (web) provides a large collection of interlinked information sources (in various formats including documents, images, and media content) relating to virtually every subject imaginable. As the Web has grown, the ability of users to search this collection and identify content relevant to a particular subject has become increasingly important, and a number of search service providers now exist to meet this need. In general, a search service provider publishes a web page at which a user can enter a query indicating what the user is interested in. In response to the query, the provider generates and transmits to the user a list of links to Web pages or sites considered relevant to that query, typically in the form of a "search results" page.

Query response generally involves the following steps. First, a pre-created index or database of Web pages or sites is searched using one or more keywords from the query to generate a list of hits (usually references to pages or sites that contain the keywords or are otherwise identified as being relevant to the query). Next, the hits are ranked according to predefined criteria so that the "best" results (according to these criteria) can be given the most prominent placement, e.g., at the top of the list. The ranked list of hits is transmitted to the user, usually in the form of a Web page containing a list of links. Other features, such as sponsored links, may also be included.

Ranking of hits is an important factor in whether a user's search ends in success or frustration. Very often, a query will return such a large number of hits that it is impossible for a user to explore all of the hits in a reasonable time. If the first few links a user clicks through fail to lead to relevant content, the user will often give up on the search and possibly on the search service provider, even though relevant content was available farther down the list.

To maximize the likelihood that relevant content will be prominently placed, search service providers have developed increasingly sophisticated page ranking criteria and algorithms. In the early days of Web search, page rank was usually based on number of occurrences and/or proximity of query keywords on a given page. This proved inadequate, and algorithms in use today typically consider various other information, such as the number of other sites on the Web that link to a given target page (which reflects how useful other content providers think the target page is), in addition to the presence of keywords. One algorithm allows users who enter a particular query to provide feedback by rating the hits that are returned. Such ratings are stored in association with the query, and previous positive ratings are used as a factor in ranking hits the next time that query is entered.

Existing algorithms, however, fail to take into account differences between individual users. For example, two users who enter the same query could actually be interested in different things; a page or site that is relevant to one user might not be relevant to another. In addition, users may have personal preferences, e.g., regarding how content is organized and displayed, which content providers they trust, etc. If the user who entered the query does not consider the high-ranking results relevant or helpful, that user will be likely to abandon the search, regardless of what other users might have thought.

Thus, it would be desirable to provide search services with a degree of personalization to enhance the likelihood of returning relevant content to each user.

### BRIEF SUMMARY OF THE INVENTION

Embodiments of the present invention provide search systems and methods incorporating user judgment information regarding various pages or sites. This information may include judgments from the querying user as well as from other users selected by the querying user as members of his or her "trust network."

According to one aspect of the present invention, a method for responding to a user query is provided. A query is received from a user. A list of hits related to the query is generated. The list of hits is modified based on a first user judgment for one of the hits, the user judgment previously provided by the user. The list of hits is further modified based on a second user judgment for one of the hits, the second user judgment previously provided by a member of a trust network for the user. The list of hits, including the modification and the further modification, is transmitted to the user.

According to another aspect of the invention, a method for responding to a user query is provided. Social network data is presented to a first user; the social network data including a number of other users and relationships there between. A selection is received from the first user selecting one or more of the other users for inclusion in a trust network. A query is subsequently received from the first user and a response generated, where generating the response includes modifying a search result for the query based at least in part on a user judgment previously defined by one of the other users in the trust network.

The following detailed description together with the accompanying drawings will provide a better understanding of the nature and advantages of the present invention.

### BRIEF DESCRIPTION OF THE DRAWINGS

Fig. 1 is a block diagram of an information retrieval and communication network according to an embodiment of the present invention.
Fig. 2. is a block diagram of an information retrieval and communication network according to another embodiment of the present invention.
Fig. 3 is an example of a search results page generated in response to a user query according to an embodiment of the present invention.
Fig. 4 is a flow diagram of a process for collecting user judgment information according to an embodiment of the present invention.
Figs. 5A-5B are examples of other search results pages generated in response to a user query according to an embodiment of the present invention.
Fig. 6 illustrates elements of an interface for entering user judgments of a site or page according to an alternative embodiment of the present invention.
Fig. 7 is a flow diagram of a process for using a users previous judgments in responding to a subsequent query from that user according to an embodiment of the present invention.
Fig. 8 is an example of another search results page generated in response to a user query according to an embodiment of the present invention.
Fig. 9 is an example of an interface supporting a user's interaction with his or her judgment data according to an embodiment of the present invention.
Fig. 10 illustrates a user interface page for defining a trust network according to an embodiment of the present invention.
Fig. 11 is a graphical representation of a portion of a social network according to an embodiment of the present invention.
Fig. 12 is a flow diagram of process steps for integrating judgments of trust network members into a search result according to an embodiment of the present invention.
Fig. 13 illustrates folder privacy settings for judgments according to an embodiment of the present invention.
Figs. 14A-14B illustrate user interface pages for searching within a library of community-approved content according to an embodiment of the present invention.

### DETAILED DESCRIPTION OF THE INVENTION

### I. Overview

### A. Network Implementation

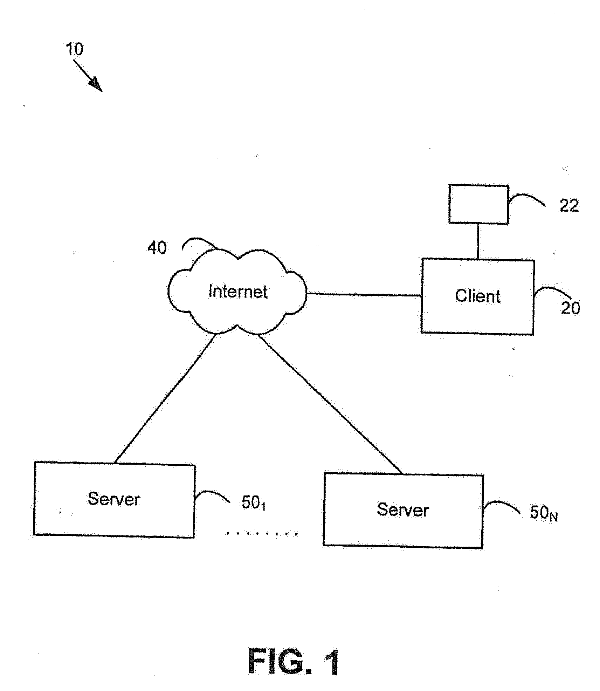

Fig. 1 illustrates a general overview of an information retrieval and communication network 10 including a client system 20 according to an embodiment of the present invention. In computer network 10, client system 20 is coupled through the Internet 40, or other communication network, e.g., over any local area network (LAN) or wide area network (WAN) connection, to any number of server systems 50₁ to 50_{N}. As will be described herein, client system 20 is configured according to the present invention to communicate with any of server systems 50₁ to 50_{N}, e.g., to access, receive, retrieve and display media content and other information such as web pages.

Several elements in the system shown in Fig. 1 include conventional, well-known elements that need not be explained in detail here. For example, client system 20 could include a desktop personal computer, workstation, laptop, personal digital assistant (PDA), cell phone, or any WAP-enabled device or any other computing device capable of interfacing directly or indirectly to the Internet. Client system 20 typically runs a browsing program, such as Microsoft's Internet Explorer™ browser, Netscape Navigator™ browser, Mozilla™ browser, Opera™ browser, or a WAP-enabled browser in the case of a cell phone, PDA or other wireless device, or the like, allowing a user of client system 20 to access, process and view information and pages available to it from server systems 50₁ to 50_{N} over Internet 40. Client system 20 also typically includes one or more user interface devices 22, such as a keyboard, a mouse, touch screen, pen or the like, for interacting with a graphical user interface (GUI) provided by the browser on a display (e.g., monitor screen, LCD display, etc.), in conjunction with pages, forms and other information provided by server systems 50₁ to 50_{N} or other servers. The present invention is suitable for use with the Internet, which refers to a specific global internetwork of networks. However, it should be understood that other networks can be used instead of or in addition to the Internet, such as an intranet, an extranet, a virtual private network (VPN), a non-TCP/IP based network, any LAN or WAN or the like.

According to one embodiment, client system 20 and all of its components are operator configurable using an application including computer code run using a central processing unit such as an Intel Pentium™ processor, AMD Athlon™ processor, or the like or multiple processors. Computer code for operating and configuring client system 20 to communicate, process and display data and media content as described herein is preferably downloaded and stored on a hard disk, but the entire program code, or portions thereof, may also be stored in any other volatile or non-volatile memory medium or device as is well known, such as a ROM or RAM, or provided on any media capable of storing program code, such as a compact disk (CD) medium, a digital versatile disk (DVD) medium, a floppy disk, and the like. Additionally, the entire program code, or portions thereof, may be transmitted and downloaded from a software source, e.g., from one of server systems 50₁ to 50_{N} to client system 20 over the Internet, or transmitted over any other network connection (e.g., extranet, VPN, LAN, or other conventional networks) using any communication medium and protocols (e.g., TCP/IP, HTTP, HTTPS, Ethernet, or other conventional media and protocols).

It should be appreciated that computer code for implementing aspects of the present invention can be C, C++, HTML, XML, Java, JavaScript, etc. code, or any other suitable scripting language (e.g., VBScript), or any other suitable programming language that can be executed on client system 20 or compiled to execute on client system 20. In some embodiments, no code is downloaded to client system 20, and needed code is executed by a server, or code already present at client system 20 is executed.

### B. Search System

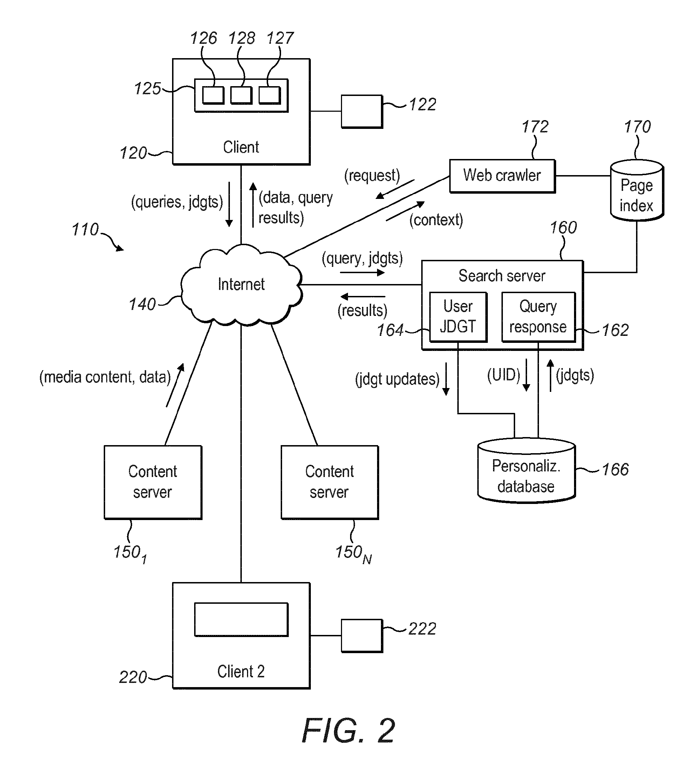

Fig. 2 illustrates another information retrieval and communication network 110 for communicating media content according to an embodiment of the invention. As shown, network 110 includes client system 120, one or more content server systems 150, and a search server system 160. In network 110, client system 120 is communicably coupled through Internet 140 or other communication network to server systems 150 and 160. As discussed above, client system 120 and its components are configured to communicate with server systems 150 and 160 and other server systems over the Internet 140 or other communication networks.

### 1. Client System

According to one embodiment, a client application (represented as module 125) executing on client system 120 includes instructions for controlling client system 120 and its components to communicate with server systems 150 and 160 and to process and display data content received therefrom. Client application 125 is preferably transmitted and downloaded to client system 120 from a software source such as a remote server system (e.g.; server systems 150, server system 160 or other remote server system), although client application module 125 can be provided on any software storage medium such as a floppy disk, CD, DVD, etc., as discussed above. For example, in one aspect, client application module 125 may be provided over the Internet 140 to client system 120 in an HTML wrapper including various controls such as, for example, embedded JavaScript or Active X controls, for manipulating data and rendering data in various objects, frames and windows.

Additionally, client application module 125 includes various software modules for processing data and media content, such as a specialized search module 126 for processing search requests and search result data, a user interface module 127 for rendering data and media content in text and data frames and active windows, e.g., browser windows and dialog boxes, and an application interface module 128 for interfacing and communicating with various applications executing on client 120. Examples of various applications executing on client system 120 for which application interface module 128 is preferably configured to interface with according to aspects of the present invention include various e-mail applications, instant messaging (IM) applications, browser applications, document management applications and others. Further, interface module 127 may include a browser, such as a default browser configured on client system 120 or a different browser.

### 2. Search Server System

According to one embodiment, search server system 160 is configured to provide search result data and media content to client system 120, and content server system 150 is configured to provide data and media content such as web pages to client system 120, for example, in response to links selected in search result pages provided by search server system 160. In some variations, search server system 160 returns content as well as, or instead of, links and/or other references to content. Search server system includes a query response module 162 configured to receive a query from a user and generate search result data therefor, as well as a user judgment module 164 configured to detect and respond to user interaction with the search result data as described below.

Query response module 162 in one embodiment references various page indexes 170 that are populated with, e.g., pages, links to pages, data representing the content of indexed pages, etc. Page indexes may be generated by various collection technologies including an automatic web crawler 172, and/or various spiders, etc., as well as manual or semi-automatic classification algorithms and interfaces for classifying and ranking web pages within a hierarchical structure. These technologies may be implemented on search server system 160 or in a separate system (not shown) that generates a page index 170 and makes it available to search server system 160. Various page index implementations and formats are known in the art and may be used for page index 170.

Query response module 162 in one embodiment also references a personalization database 166. Personalization database 166, which may be implemented using conventional database technologies, includes records of judgments as to the merits of particular Web pages or sites (e.g., positive and/or negative ratings), with each judgment being associated with a specific user. For example, a user identifier, the URL, and a rating score given to the URL by the user may be stored in a database record. Collection of judgment data to be stored in personalization database 166 and judgment data formats are described below.

Query response module 162 is configured to provide data responsive to various search requests (queries) received from a client system, in particular from search module 126. As used herein, the term "query" encompasses any request from a user (e.g., via client 120) to search server 160 that can be satisfied by searching the Web (or other corpus) indexed by page index 170. In one embodiment, a user is presented with a search interface via search module 126. The interface may include a text box into which a user may enter a query (e.g., by typing), check boxes and/or radio buttons for selecting from predefined queries, a directory or other structure enabling the user to limit search to a predefined subset of the full search corpus (e.g., to certain web sites or a categorical subsection within page index 170), etc. Any search interface may be used.

Query response module 162 is advantageously configured with search related algorithms for processing and ranking web pages relative to a given query (e.g., based on a combination of logical relevance, as measured by patterns of occurrence of the search terms in the query; context identifiers associated with query terms and/or particular pages or sites; page sponsorship; connectivity data collected from multiple pages; etc.). For example, query response module 162 may parse a received query to extract one or more keywords, then to access page index 170 using the keywords, thereby generating a list of hits. Query response module 162 may then rank the hits using one or more ranking algorithms, which in some embodiments may include conventional ranking algorithms.

In embodiments of the present invention, query response module 162 is also configured to access personalization database 166 to retrieve judgment information associated with the user who entered the current query and to incorporate such judgment information into the query results. For example, in one embodiment, query response module 162 generates a separate list of "favored" results based on favorable (positive) user judgments or ratings of particular sites previously entered by that user. In another embodiment, query response module 162 incorporates the user's judgments or ratings of particular sites in the ranking of search results. In yet another embodiment, query response module 162 may use unfavorable (negative) user judgments or ratings of particular sites to determine whether to drop a hit from the list of results.

In addition, query response module 162 may also access judgment information associated with other users who are members of the querying user's "trust network." Judgments from trust network members may also be incorporated into the ranking of the search results and or generation of the list of favored results, as described below.

A user's personal rating for a site or page may be entered in various ways. In some embodiments, search result data is presented as a list of links (hits) and may include, e.g., a page or site title, one or more excerpts from the content of that page (e.g., showing the context in which search terms occur), and other options, such as a link to a cached copy of the content. The result data may also include buttons or other interface elements allowing the user to rate the site on a predefined scale (e.g., thumbs-up or thumbs-down, zero to four stars, numerical ratings from 1 to 10, etc.). When the user operates the interface element to rate a site, user interaction module 164 receives new judgment data from the user and updates personalization database 166. In one embodiment, user judgment module 164 also initiates an automatic refresh of the results page in response to the new judgment data. During this refresh operation, the hits listed on the results page may be reranked using the new judgment, and an updated page reflecting the new rankings is transmitted to the user. If the new rating is favorable, the new page may also list the newly rated site among the "favored" results. Accordingly, the user's new judgments can have an immediate effect on the displayed results of the current search, as well as being stored for use in ranking results of future searches.

To enable personalization features such as user judgments, search server 160 advantageously provides a user login feature. Various options for enabling user identification and authentication (e.g., providing each user a unique user ID and a password and providing an interface for the user to enter this information) are known in the art and may be used in connection with embodiments of the present invention. Once the user has identified himself or herself, e.g., by logging in, the user can enter and/or update personal judgment information by interacting with user judgment module 164 as described below. Further, each query entered by a logged-in user can be associated with the unique user ID for that user; based on the user ID, query response module 162 can access personalization database 166 to incorporate the user's stored judgment information into responses to that user's queries.

In addition to using the user's own judgments in responding to a query from a given user, query response module 162 may also use an aggregate judgment (e.g., an average rating) obtained from every user who has provided a judgment of a page or site. Such aggregate judgment data for a given page may be stored, e.g., in page index 170, and used by query response module 162 to rank hits in response to a query. Aggregate judgment data may be updated at regular intervals, e.g., daily or hourly, by obtaining updates from personalization database 166. Alternatively, user judgment module 164 may forward judgment data as it is received to an aggregator module (not shown), which can update aggregate judgment data and store the updates in page index 170 approximately in real time.

Further, query response module 162 may also use judgment data from other users who are members of a community to which the querying user belongs or judgment data from other users to whom the querying user is linked via a trust network. An aggregate trust network judgment for a given page or site may be may be computed and used in responding to queries.

It will be appreciated that the search system described herein is illustrative and that variations and modifications are possible. The content server and search server system may be part of a single organization, e.g., a distributed server system such as that provided to users by Yahoo! Inc., or they may be part of disparate organizations. Each server system generally includes at least one server and an associated database system, and may include multiple servers and associated database systems, and although shown as a single block, may be geographically distributed. For example, all servers of a search server system may be located in close proximity to one another (e.g., in a server farm located in a single building or campus), or they may be distributed at locations remote from one another (e.g., one or more servers located in city A and one or more servers located in city B). Thus, as used herein, a "server system" typically includes one or more logically and/or physically connected servers distributed locally or across one or more geographic locations; the terms "server" and "server system" are used interchangeably. In addition, the query response module and user judgment module described herein may be implemented on the same server or on different servers.

The search server system may be configured with one or more page indexes and algorithms for accessing the page index(es) and providing search results to users in response to search queries received from client systems. The search server system might generate the page indexes itself, receive page indexes from another source (e.g., a separate server system), or receive page indexes from another source and perform further processing thereof (e.g., addition or updating of various page information).

### II. User Judgment Integration

### A. Collecting user judgments

In accordance with one embodiment of the present invention, users may interact with search server 160 to rate search result pages via user judgment module 164. The judgments may be positive or negative. As noted above, these judgments (also referred to herein as ratings) are stored in personalization database 166 and used in responding to current and future queries entered by that user. In some embodiments, judgment data can also be used to provide various customized search services as described below.

In various embodiments of the present invention, judgment data can be collected from users in a variety of ways, including ratings in response to queries, ratings received via a toolbar, and judgment data imported from other users, e.g., via e-mail or instant messaging (IM) programs.

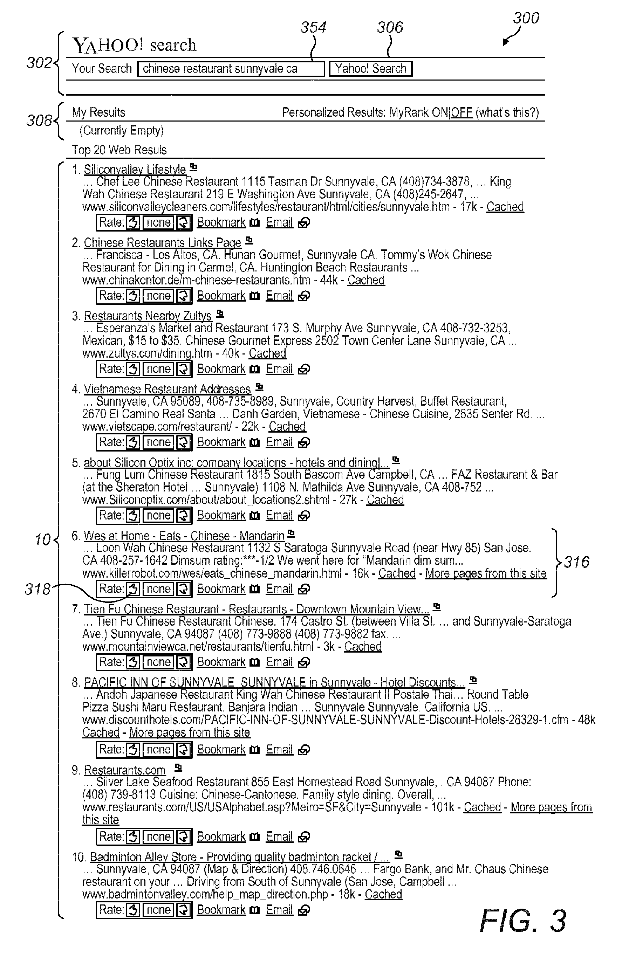

In preferred embodiments, users are provided the option to rate pages or sites returned in response to their queries. Fig. 3 shows an example of a search results page 300 that provides rating features according to an embodiment of the present invention. Results page 300 might be generated by query response module 162 in response to a user's query. In this embodiment, results page 300 includes a banner section 302. In addition to page identifying information, banner section 302 includes a search box 304, which shows the current query (e.g., "chinese restaurants sunnyvale ca") in editable form together with a search button 306 enabling the user to change the query and execute a new search. These features may be of generally conventional design.

Section 308 is a personalized results area ("My Results"), in which hits to which the user has previously given favorable (positive) ratings are displayed. In this example, section 308 is empty because the user has not previously given favorable ratings to any of the hits.

Section 310 displays some or all of the hits in order based on a ranking determined by query response module 162. Conventional ranking algorithms may be used to generate this ranking. Each entry 312 in section 310 corresponds to one of the hits and includes the title of that page (or site) and a brief excerpt (or abstract) from the content of that page. Excerpts or abstracts may be generated using conventional techniques. The URL (uniform resource locator) of the site is also displayed. Below the URL are rating buttons 314. While viewing page 300, the user may give the site a positive ("thumbs up") or negative ("thumbs down") rating by clicking the appropriate one of buttons 314. Buttons 314 also include a "none" button that the user can click to clear a previous positive or negative rating. It is to be understood that different rating schemes and rating buttons may be implemented.

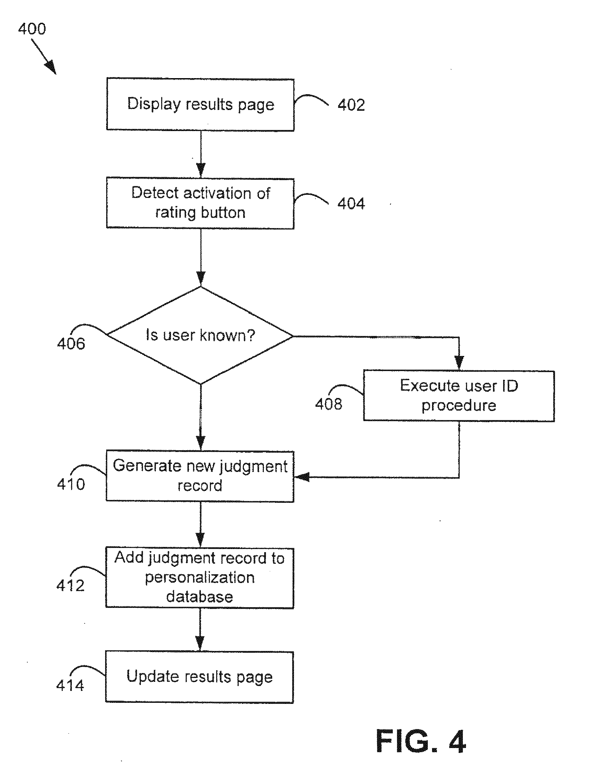

Fig. 4 is a flow diagram of a process 400 by which a user can enter judgment information using rating buttons 314. At step 400, the results page 300 (or other appropriate results page), including rating buttons 314, is provided to the user. At step 402, the user's activation of one of rating buttons 314 for one of the displayed hits is detected. (The user might visit the site and then return to results page 300 to rate it, or the user might rate the page without first visiting the site.) At step 404, it is determined whether the user's identity is known, e.g., whether the user is logged in. If not, at step 406, a user identification procedure (e.g., a conventional login procedure) is initiated.

Once the user's identity is known, at step 408, a new judgment record is generated. Various formats for the judgment record may be used. In one embodiment, the judgment record contains the following fields:
- URL: The URL of the page or site being rated.
- Title: The title of the page or site, which may be obtained from the HTML field or supplied by the user.
- Abstract: An abstract of the page or site. The abstract may be automatically generated using conventional techniques.
- Author: Identifier for the user who rated the URL. This may be, e.g., a login name.
- Host flag: Indication of whether the rating should be applied to the page or the entire site. For instance, a rating of the site at http://www.domain.tld/ would have the host flag set to true, while a rating of the single page at http://www.domain.tld/adirectory/apage.html would have the host flag set to false. This flag can be used to treat ratings for a single page differently from a rating for an entire site, as described below.
- Referral: Contextual information about how the user arrived at the page (or site). In the case of judgment records generated via search results pages, the referral would include the query in response to which the results page was produced. Examples of referral information for judgment records generated from other sources are described below.
- Old Referral: Contextual information related to one or more previous instances where the user rated the page or site. This field may also store the previous rating.
- Timestamp: Indication of when the entry was created or last updated (e.g., YYYY-MM-DD HH:MM:SS format).
- Score: A numerical value reflecting the user's rating of the URL. In one embodiment, a score of -2 corresponds to a negative (thumbs down) rating, +2 to a positive (thumbs up) rating, and zero to a neutral (none) rating. Other scoring systems may also be used (e.g., number of stars, rating from 1 to 10, etc.).
- Description: Free text description or annotations of the page content or other information. This field is initially blank and can be filled in by the user as described below. For example, the user may be prompted to enter a description during step 408 of process 400. In some embodiments, the user can edit the description at other times, as described below. In other embodiments, the user may be allowed to include may include structured text in the description. For instance, a hierarchy or other set of predefined annotation tags may be defined, and the user can apply these tags as desired. In another embodiment, predefined attribute-value pairs may be used. In yet another embodiment, structured data using XML or a similar markup language may be accepted.

It is to be understood that this listing is illustrative and that other judgment records with different fields may also be used. For instance, the judgment record could save the full text of the page or a set of keywords extracted from the full text. In another embodiment, search server 160 may categorize the page or site, and that category data may be saved as part of the judgment record.

Other data related to the rated page or site may also be collected in the judgment record and updated as the user continues to browse. For example, a counter may be provided to count the number of times the user visits a rated page or site, or a "last visited" timestamp may be provided to indicate the time of the most recent visit to the rated page or site.

User judgment records may be formatted in any format suitable for storing in personalization database 166. In one embodiment, the judgment record is accessible by at least URL and author fields.

At step 410, the new judgment record is added to the personalization database 166. At step 412, a new results page, reflecting the new judgment information, is generated and transmitted to the user.

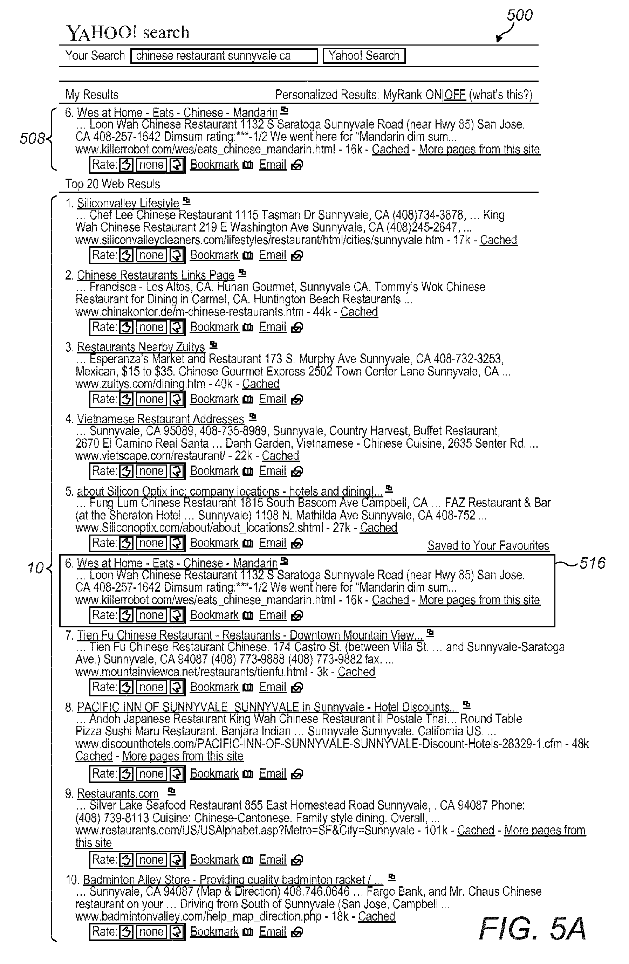

For example, suppose that a user enters the query "chinese restaurant sunnyvale ca" and sees the page shown in Fig. 3. Suppose further that the user decides that entry 316 ("Wes at Home") is a useful source of information about this topic. The user could give this page a favorable rating by clicking on "thumbs up" button 318, thereby initiating process 400 (Fig. 4). The judgment information would be added to personalization database 166, and page 300 would be updated and redisplayed. Fig. 5A shows an updated results page 500 that might be generated in response to this sequence of events. Page 500 is generally similar to page 300 of Fig. 3. It differs in that "My Results" section 508 is no longer empty; it now displays the favorably rated hit. Also, link 516 to the newly rated site has been highlighted to reflect its rating. In this embodiment, the favorable rating does not affect the ranking of sites in the main search results listing 510; in other embodiments, re-ranking might be done, with favorably rated sites tending to move up in the rankings and unfavorably rated sites tending to move down.

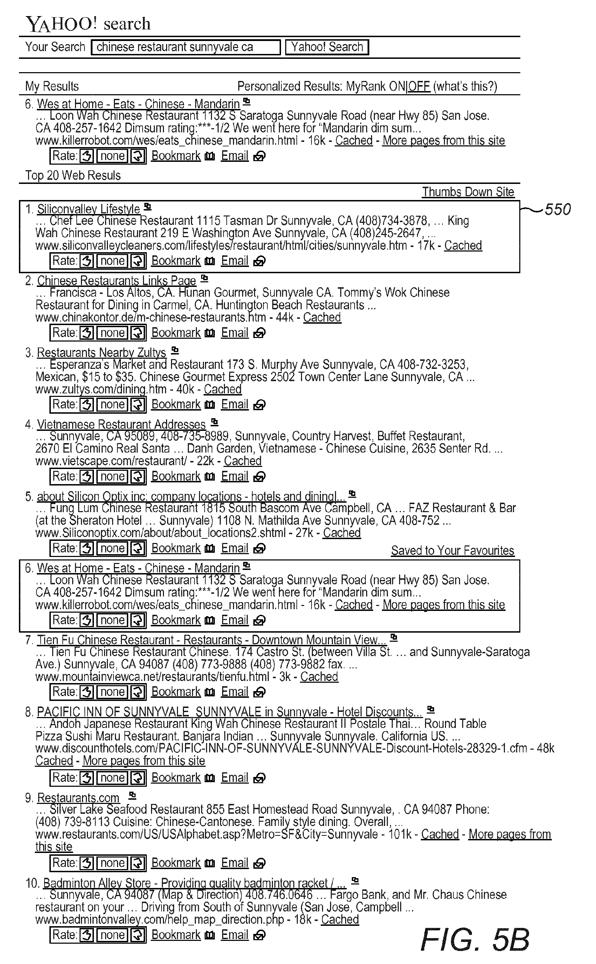

When a user gives a page or site a negative (unfavorable) rating, that entry might also be highlighted, as illustrated in Fig. 5B by entry 550. As with positive ratings, the negative highlighting is added to the page in response to the user's act of entering the rating. (In the case of stars or 1-10 ratings, positive and negative ratings may be defined by reference to appropriate threshold scores; thus, a negative rating need not be a negative number.) The design for highlighting may vary from the boxes shown herein; whatever highlighting scheme is used should be designed such that markings for unfavorably rated hits and favorably rated hits are visually different enough that a user can readily recognize both. (It should be understood that all ratings shown herein are for illustrative purposes only and are not meant to imply any opinion, endorsement, or disparagement of any actual Web site or page.)

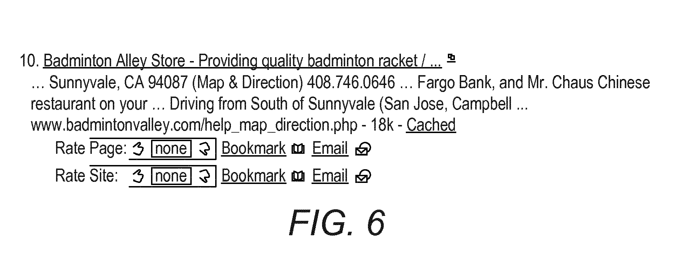

In some embodiments, a user may enter judgment information on a per-site or per-page basis at the user's option. For example, Fig. 6 illustrates an alternative interface format in which the option to rate the page or the entire site is provided. Referring to the judgment record format described above, if the user rates the entire site, the Host flag would be set to true; if the user rates only the page, the Host flag would be set to false. As an alternative to the rating interface shown in Fig. 6, the rating interface of Fig. 3 might be used; after the user clicks on one of the rating buttons, a pop-up dialog box or temporary redirection to a new page may be used to prompt the user to elect whether to rate the page or the site.

In other embodiments, users may create judgment data in other ways. For example, a user may be able to rate any page or site she views by using a persistent interface such as a toolbar that enables communication of the judgment data to the search provider. In another embodiment, a user may be able to import judgment data from another user. Examples of such embodiments are described in detail in above-referenced Provisional Application No. 60/614,232.

### B. Using user judgment information

In accordance with aspects of the present invention, user judgment data can be used in a variety of ways to enhance the user's ability to collect and find information that is of interest to that user. In one embodiment, judgment data entered by a user while viewing a results page is used in real time to update the displayed results for the current query, in addition to storing the information in personalization database 166 for future use. User judgment data may be used in a variety of ways to enhance query response. For example, a separate list of favorably-rated hits may be included in the search results, favorably or unfavorably rated hits may be highlighted in the results list, or ratings data might be used as a factor in ranking search hits.

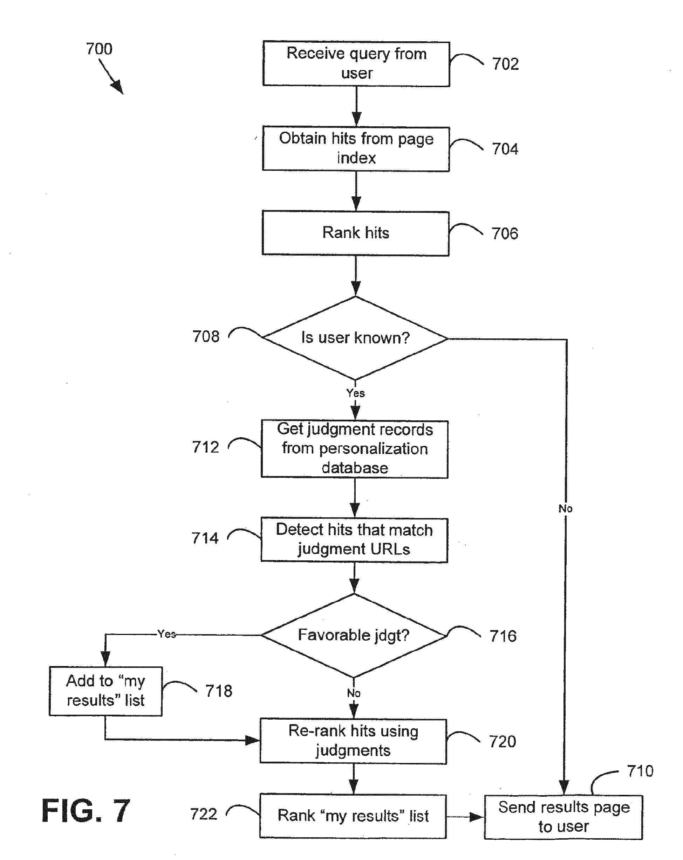

Fig. 7 is a flow diagram of a process 700 that may be implemented in query processing module 162 (Fig. 2) for incorporating a user's previously stored judgment data into a response to a current query from that user. At step 702, the query is received. At step 704, a list of hits corresponding to the query is obtained, e.g., from page index 170 (Fig. 2). At step 706, query processing module 162 ranks the hits, e.g., using conventional algorithms.

At step 708, query processing module 162 determines whether the user identifier for this user is known (e.g., whether the user has logged in). If not, query processing module 162 may send the results page to the user without personalization at step 710, enabling users to perform searches and obtain results without logging in or being registered in any way with search server 160. If the user is known at step 708, then the results page is customized for that user, based on information in personalization database 166.

More specifically, at step 712, query processing module 162 provides the user identifier to personalization database 166 and obtains judgment records authored by that user. At step 714, the URLs of the retrieved judgment records are compared to URLs of the hits to detect any hits that match URLs for which the user has previously entered judgments. For judgments where "Host flag" is set to true, a match (referred to herein as a "partial match") is detected if the hostname portion of the hit URL (e.g., http://www.domain.tld/) matches the host name portion of the URL stored in the judgment record. Otherwise, an "exact" match between the judgment URL and the hit URL is required. For each match, it is determined at step 716 whether the judgment is favorable (positive), e.g., by reference to the "Score" field of the judgment record. If so, then the hit is added to the favored results ("My Results") list.

At step 720, after comparisons between hits and judgments are completed, the results list is optionally reranked using the judgment information. For example, a base score can be generated for each hit (whether it matches a judgment or not) using a conventional ranking algorithm. For hits that matched a judgment, a "bonus" can be determined from the judgment's Score value. The bonus is advantageously defined such that favorably rated sites tend to move up in the rankings while unfavorably rated sites tend to move down. For instance, if low scores are better, the bonus for a favorable rating may be defined as a negative number and the bonus for an unfavorable rating as a positive number. In some embodiments, partial URL matches may be given a smaller bonus than exact URL matches. Unrated sites would receive no bonus. This bonus can be added (algebraically) to the base score to determine a final score for each hit, and reranking can be based on the final score.

In some embodiments, reranking at step 720 may also include dropping hits that match unfavorably rated sites from the list of hits to be displayed. In such embodiments, the search results page sent to the user may include an indication of the number of hits that were dropped due to unfavorable ratings and/or a "Show all hits" button (or other control) that allows the user to see the search results displayed with the unfavorably rated hits included. Another variation allows the user to click on a link to see just the unfavorably rated hits.

At step 722, the "My Results" list is ranked. In one embodiment, this ranking may be done, e.g., using the same final score described above. In another embodiment, hits in the "My Results" list may be sorted by user rating; hits with the same rating may be further sorted according to the base score described above. The results page, in this case including the personalized "My Results" section, is sent to the user at step 710.

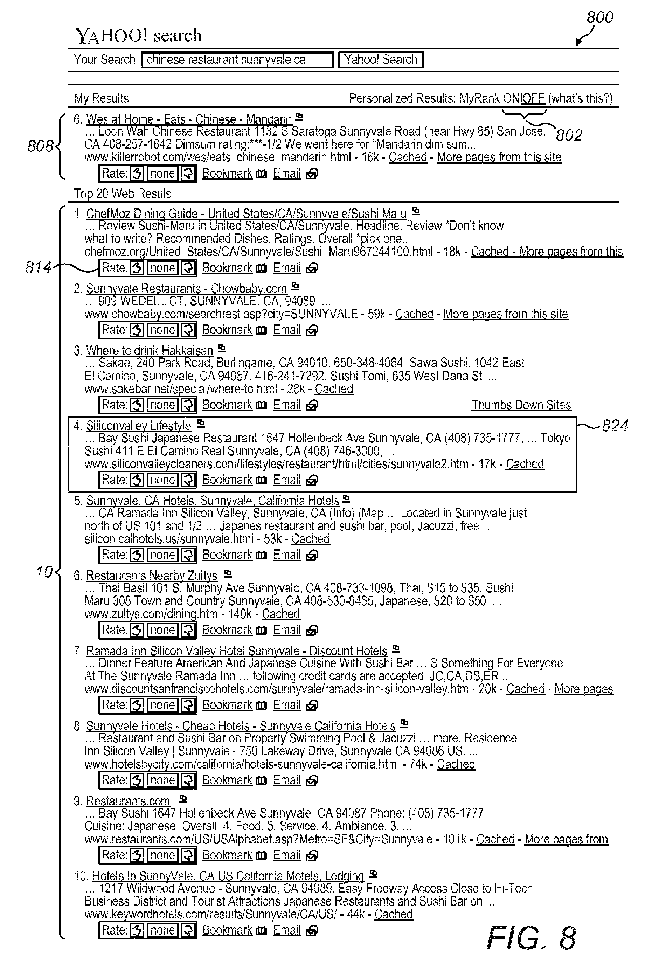

As an illustration of process 700, suppose that the sequence of events leading to the page shown in Fig. 5 has occurred and that a judgment record has been created for the user's ranking of the "Wes at Home" page. At some later time (e.g., later that day, the next week, a month later), the same user enters a different query, "sushi sunnyvale ca". Assuming that the "Wes at Home" page is also a hit for the new query, a results page 800 as shown in Fig. 8 might be generated. In this case, the "My Results" section 808 includes the "Wes at Home" page, even though that page did not make the top ten hits under the ranking scheme used to generate section 810.

It is to be understood that in this embodiment, users do not see any effect of other users' rankings. For example, suppose that after the events leading to the page shown in Fig. 8, a different user enters the query "chinese restaurant sunnyvale ca". This second user would not see the "Wes at Home" page in a "My Results" list or otherwise highlighted unless the second user had also rated the site.

In other embodiments, information about other users' judgments may be used. For example, ratings assigned to the same page or site by different users can be averaged to generate a "global" score for that page or site. In one such embodiment, search server 160 periodically (e.g., once per day) executes an algorithm that searches judgment records in personalization database 166 by URL to collect all ratings that any user might have assigned to the page or site having that URL. These ratings are then averaged to determine a global score for the page or site, which score may be cached.

Global scores may be used in various ways. In one embodiment, the global score of a page or site may be used as a factor in the search-results ranking algorithm when the URL for the page or site matches a hit for a given search. In another embodiment, the global score may be displayed next to each hit on a search results page, along with the user's own rating (if the user has given one), regardless of whether the global score is used in the page ranking. In some embodiments, the user may have the option to show or hide global scores, and/or to use or ignore global scores when ranking search hits. Controls for such options may be included on a search results page.

In addition, if the user has a trust network defined, scores from members of the trust network may be used to modify the rankings and/or to generate listings of favored results. Aspects of the present invention related to trust networks are described below.

### C. User Interface to Judgment Records

Some embodiments of the present invention provide additional features enabling a user to interact with his or her personal judgment information. For example, a user may be provided with a switch option to activate or deactivate judgment features, e.g., using the "MyRank" control toggle 822 shown in Fig. 8. In one embodiment, when judgment features are deactivated, the "MyResults" area 808, highlighting (e.g., box 824), and rating buttons 814 would not be displayed.

As a user finds and rates various pages, the user will tend to build up a personalized library of Web content that is useful to that user. In some embodiments, user judgment module 164 (Fig. 2) provides an interface that allows users to view and update their judgment data (e.g., judgment records as described above) and to interact with that data in a variety of ways. For example, a "My Ratings" page might be made accessible to the user, e.g., by providing a link on a search screen or search results page while the user is logged in, by providing a link from a personalized portal page or site generated for that user (such as a "My Yahoo!" page), or by providing a button on a browser toolbar or other persistent interface.

In some embodiments, user judgment module 164 (Fig. 2) also provides an interface that allows users to view and update their judgments without going to a search results page. For example, a "My Ratings" page might be made accessible to the user, e.g., by providing a link on a search screen or search results page while the user is logged in, or by providing a link from another page generated for that user such as a "My Yahoo!" page.

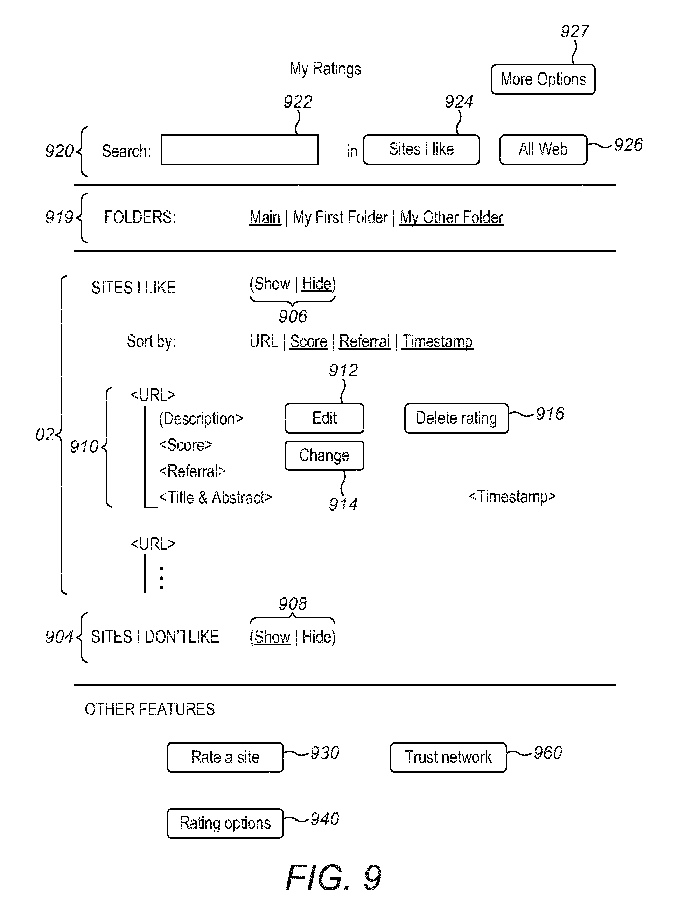

Fig. 9 is an example of one implementation of a "My Ratings" page 900 for a user according to an embodiment of the present invention. Page 900 provides separate listings of favored pages or sites 902 and/or disfavored pages or sites 904, with respective toggles 906, 908 to show or hide the listings in each section. An example page or site listing 910, which in some embodiments might include a link to the rated page or site, includes the following fields from the judgment record described above: Title, Abstract URL, Score, Referral, Timestamp, and Description. The user has various options for modifying the entry, such as editing the Description (button 912), changing the rating (button 914) or deleting the judgment record (button 916). The Description field may be edited to include any comment the user elects to make about the page or site; when the page or site is displayed as a search result, this description may be included in the listing in some embodiments. The user can sort the list by URL, Score, Referral, or Timestamp using "sort" buttons 917. A similar listing (not shown) can be generated in area 904 for unfavorably rated pages or sites.

In some embodiments, the listings may include additional information and may be sortable based on that information. For example, a list of some number (e.g., 5, 10, 20, 50) of most frequently visited or most recently visited rated pages or sites might be viewable. In other embodiments, the user can also view contextual information about the rating of the page (e.g., contents of the Referral field).

In some embodiments, users can organize their judgment data (e.g., judgment records) using folders. For example, each user may have a "Main" folder, into which that user's new judgment records are placed by default. The user may define additional folders as desired. In some embodiments, the user may also define subfolders within folders. To enable users to manage their folders, page 900 includes a folder navigation area 919. In this area, the current folder is displayed, and one or more controls are provided on page 900 and/or other pages accessible from page 900 by which the user can navigate to each of his or her folders; create, rename, and delete folders; place judgments in selected folders; etc.

In one embodiment, a folder is defined using a folder record in personalization database 166. The folder record contains the following fields:
- Author: Identifier of the user to whom the folder belongs.
- ID: A unique identifier of the folder, automatically assigned by the system and used to associate judgments with folders.
- Name: A user-assigned name for the folder, which may be limited in length (e.g., 80 characters maximum).
- Description: User-editable text description, similar to the description field for judgment records described above.
- Active flag: Indication of whether judgments in this folder should be used in responding to queries.
- Publication flag: Indication of whether the judgments in this folder should be published. Publication is described below.

It will be appreciated that folder formats may vary and that other fields may be included. With the exception of the main folders, the user may freely create, rename, and delete folders.

Where folders are implemented, page 900 may provide additional interface elements (not shown) enabling the user to move or copy judgments from one folder to another. In one embodiment, judgment records may include a "Folder ID" field indicating the folder(s) to which each judgment belongs. This field may be configured to store multiple folders IDs, so that the same judgment record may be included in multiple folders. In other embodiments, independent copies of a judgment record can be stored in different folders so that any changes to the judgment in one folder would not affect a copy in another folder.

While folders are optional, providing folders allows an additional degree of user control over the search experience. For example, a user can arrange his or her judgments in two folders, with the Active flag set to true for one of the folders and to false for the other. When the user enters a query, only judgments in the first folder would affect the results. The user may also use folders to collect and organize favorite sites in a manner somewhat similar to "bookmarks" or other personal site lists supported by various Web browser programs. The folders and judgment data described herein, however, are maintained for the user by search server 160 and can be made available to the user regardless of the location from which he or she accesses search server 160.

It should be noted that in some embodiments, a search service provider (e.g., the operator of search server 160) may provide a browser toolbar or other persistent interface with a portable "Bookmark" feature that allows users to access their lists of saved links to interesting sites from any Web browser client on which the toolbar is installed. The saved judgment data (at least for favorably rated pages or sites) may be used to generate bookmarks for the user's list, and the bookmark listing may display the rating the user gave the site.

In various embodiments, page 900 can support any number of other user interactions with judgment data. For example, "Rate a site" button 930 provides a link to a form (not explicitly shown) that the user can use to rate a page or site without first executing a search or visiting the site. The form may provide, e.g., fields for entering the URL, a Description, and a Score, from which a new judgment record for personalization database 166 can be created. In this case, the Referral field may be left blank or filled with the user identifier or other value indicating manual entry; the Timestamp is automatically created when the user submits the new judgment record.

"Rating Options" button 940 is a link to a page (not explicitly shown) that enables the user to access and control "default" preferences for various rating features, e.g., whether global scores should be shown (or relied on) in page rankings, whether the user's ratings should be used or inactivated, etc. In some embodiments, this page also allows the user to use or inactivate ratings from his or her trust network. User preferences for these and any other options are stored in a user profile database, which may be personalization database 166, and applied whenever the user logs in. Buttons and options controllable from search results pages (e.g., as described above) may temporarily override the defaults set via "Rating Options" button 940, but these defaults can be restored for the next query or the next time the user logs in.

Additional examples of a user interface page that provides access to rating information are given in above-referenced Provisional Application No. 60/614,232. Also described therein are further features related to searching a user's rated sites, performing iterative searches using judgment data, exporting and publishing user judgment data, importing user judgment data, and various other optional features of and uses for judgment data. It is to be understood that any or all of these features may be included in an embodiment of the present invention.

### III. Communities and Trust Networks for Enhanced Searching

In embodiments of the present invention, search results may be influenced not only by a user's own judgments but also by judgments entered by certain other users associated with the user who entered the query. A collection of associated users is referred to herein as a "community." Communities may be formed in various ways. For example, a user may actively join a community (such as a Yahoo! group) that is focused on a particular interest of the user, such as a sports team, movie, book, etc. In another aspect, each user can be viewed as the "center" of a personal community whose other members are the center user's direct contacts; for instance, everyone in a user A's e-mail address book or everyone with whom A regularly exchanges instant messages might be regarded as a member of A's community. In still another aspect, various "default" communities based on known user characteristics can be defined. Examples of such communities include a community based on geographical location (e.g., country or ZIP code), age, sex, occupation and so on.

As a general rule, it can be expected that members of a community will tend to have some similarity of interests and tastes, at least in some areas. For instance, members of a ZIP-code based community will tend to look for services in the same area; members of an interest-based community (such as a Yahoo! group) will tend to look for information related to that interest. Thus, judgment data from one member of the community is likely to be of value to another member of the community.

Accordingly, some embodiments of the present invention provide that, where user A belongs to a community, ratings previously entered by any other members of that community may be used in responding to queries entered by user A. For example, an aggregate rating by members of the community can be computed and displayed with search results presented to user A; the aggregate rating can be used to rank results; the "My Results" section of the search results page may be extended or modified to show results favored by other members of the community; and so on.

One extension of this principle allows different trust weights (e.g., integers from 1 to 10) to be assigned to reflecting user A's degree of confidence in the judgments of other members of the community. The trust weights may be used in computing an aggregate rating for a page or site so that the opinion of users trusted more by user A has more effect on the aggregate rating than the opinion of users trusted less.

In another extension, a trust network can be defined, based on various users' associations with different communities. For example, users who are members of the same community may be defined as "neighbor" nodes in the trust network. Where a user can belong to multiple communities, indirect relationships may exist. For instance, suppose that user A is a member of community 1 but not community 2 and user B is a member of community 2 but not community 1. If there is a user C who is a member of both community 1 and community 2, then user A and user B would have a connection through user C.

Again, different trust weights can be assigned to user A's neighbors to reflect user A's degree of confidence in each neighbor's judgments. In addition, trust placed by user A in neighbors can be propagated to more distant members of the trust network. Example embodiments of trust weights and trust propagation are described in above-referenced Application No. 10/812,719 and Application No. 10/942,335; additional examples are known in the art and may be applied in embodiments of the present invention as desired.

The following sections describe creation of community and trust network information for a user (generally referred to as user A) and various ways in which judgment data from trust network members can be used. It should be noted that, while the description refers to trust networks in places, giving weight to indirect relationships is not required. Thus, the description also includes situations where only judgment data of user A's immediate neighbors in a trust network (e.g., members of a community to which user A belongs) is used.

### A. Community and Trust Network Creation

In one embodiment, a user can interact with her own community data by clicking on a "Trust Network" link 960 on "My Ratings" page 900. This link takes the user to a new page or other appropriate interface that allows the user to expressly identify individual trusted users. The interface may vary in different embodiments.

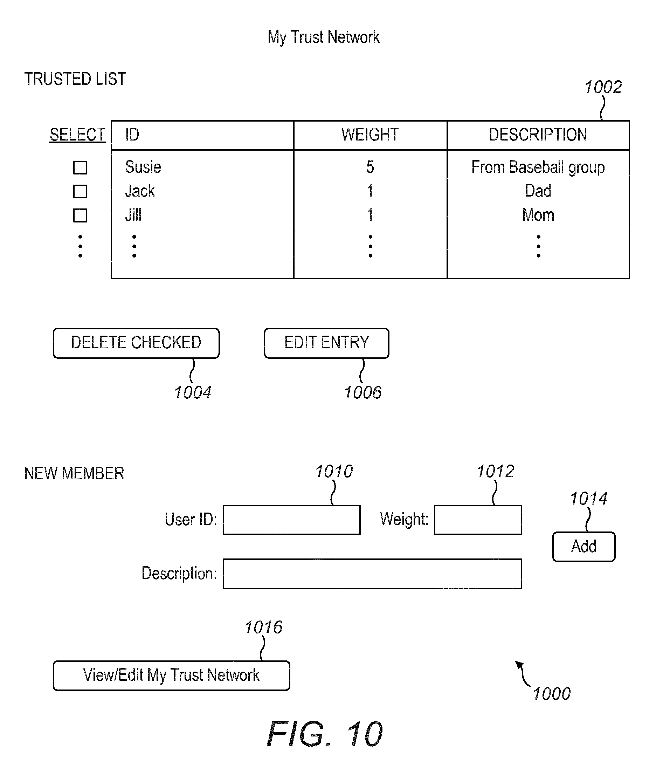

Fig. 10 illustrates a trust network interface page 1000 according to one embodiment of the present invention. Page 1000 provides various mechanisms for the user to view and modify a list of trusted users (which serves, in this instance, as a community). The current "trusted list" is shown in a table 1002 that lists the user ID, trust weight, and a description for each member. The Description field, which may be blank, can be populated by the user with any information desired, such as the member's real name, nickname, relationship, etc. Table 1002 may be implemented to support sorting by any of its fields and may include other information about each member (e.g., a timestamp indicating when the member was added). Some embodiments may also provide an Active flag for each member, allowing the user to temporarily disregard that member's judgments without removing the member from the list. Information for populating table 1002 can be stored, e.g., in appropriate records in personalization database 166.

For purposes of modifying the list, various editing tools are provided. For example, the user can select an entry in table 1002 and delete that member from the list (button 1004), change the weight (button 1006), or change the description (button 1008). A new member can be added by entering the user ID (box 1010) and a weight (box 1012), then clicking an "Add" button 1014. In another embodiment, page 1000 might include a list of communities with which user A is associated (rather than just individuals), and user A might elect to include or exclude each community from the trusted list.

In one embodiment, a trust network is automatically built up from trust lists defined by user A and additional trust lists defined by the various users who are on user A's trust list. In addition to manual entry, trust lists and a trust network can be generated automatically from any source of information available to the service provider about users' relationships to each other.

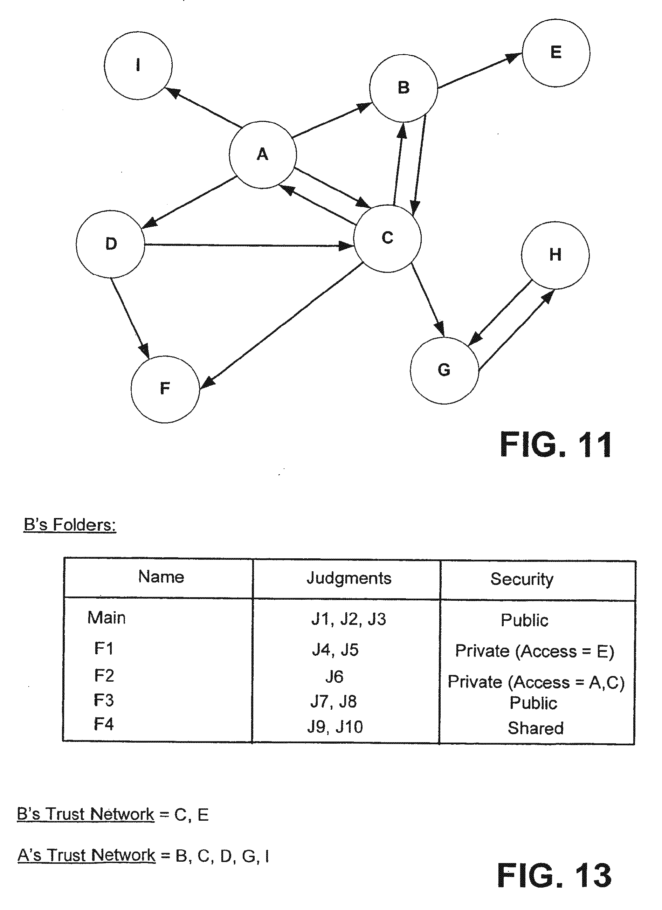

For example, in one embodiment, a trust network can be built up from an instant messaging (IM) service. As is generally known in the art, an IM user (e.g., user A) who is registered with a particular IM service can define a "friend" list (also sometimes called a "buddy" list), which is a list of user identifiers for other users with whom user A wants to communicate. The presence of user B on user A's IM friend list indicates a connection from user A to user B in a social network. By defining connections based on which users are on which other users' IM friend lists, a social network such as that shown in Fig. 11 can be built up. In Fig. 11, users are represented by nodes (A, B, C, etc.) and the presence of user B on user A's friend list is indicated by an arrow from A to B. (If both are present on each other's lists, two arrows are shown.) Other sources of relationship data may be used in addition to or instead of IM. friend lists; some examples are described below.

In some embodiments, the user can view and directly edit a graphical representation of her trust network, e.g., by activating a "View Trust Network" button 1016 on page 1000. When user A activates this button, a trust network graph such as that shown in Fig. 11 is presented, showing user A's connections to other users (e.g., B, C, D, and I) and further connections of those users to still other users who might or might not have a direct connection to A (e.g., user C is connected to B, who is directly connected to A, and to user G, who is not). Remote connections can be included in the graph to any degree desired (e.g., user C is shown to be connected to user G, who in turn is connected to user H).

Presented with this graph, user A can traverse the trust network from node to node, selecting users (e.g., B and C but not D) to be added to A's trusted list, e.g., by clicking on the corresponding node. Nodes for users who have been selected for inclusion on A's trust list may be highlighted if desired. It should be noted that the selection is advantageously unidirectional; that is, just because A selects B to be on A's trust list, it is not required that A also be placed on B's trust list. Thus, each user has complete control over which other users are on his or her trust list. In addition, selection is advantageously not transitive; that is, A can select B without also selecting C or E. In some embodiments, user A may also be able to remove members from the trust list by clicking on the corresponding node in the trust network view.

In some embodiments, when user A clicks on a node to add a member, A is prompted to assign a weight for that member. As mentioned above, the weight advantageously reflects the degree of A's confidence that ratings by this member would be similar to ratings that A would give to a page or site. In one embodiment, the weight might be an integer from 1 to 5; other scales may also be used, and noninteger or negative weights may also be allowed. Weights may be displayed inside or near the nodes corresponding to trust list members, and in some embodiments user A might be able to modify the weights while in the trust network view.

As mentioned above, in some embodiments, additional trust relationships may be established for user A based on the structure of the trust network, without requiring user A to actively add these users to A's trust list. For example, part of the trust placed by A in users at one degree of separation (e.g., users B, C, D, and I in Fig. 11) might be propagated to users at two degrees of separation (e.g., users E, F, and G in Fig. 11) using a suitable trust propagation algorithm. Examples of trust propagation algorithms are described in above-referenced Application No. 10/812,719 and Application No.10/942,335. If desired, such propagated trust weights can be shown in the trust network view.

Those skilled in the art will appreciate that a trust network can be generated from a variety of data sources, not limited to IM friends lists. For example, e-mail address books maintained by various users may provide identifiers for users they regularly communicate with. In another embodiment, membership of two users in the same Yahoo! group (or any other voluntary association of users) may be used to establish a bidirectional relationship between the users. In addition, various web-based "social networking" services have developed protocols that allow users to define associations or relationships between themselves and others, with extended networks being built up from the user-defined associations; such protocols may be adapted for defining trust networks for practicing the present invention. In yet another embodiment, user demographics can be used to define relationships among users (e.g., users with the same ZIP code or users belonging to a particular age group). In still another embodiment, relationships between users can be defined by analyzing the judgment data entered by various users. For example, two (or more) users who tend to rate pages or sites similarly may be included in a community.

Any or all of these techniques can be used to define a trust network. Where multiple sources are used to generate the trust network, links (arrows) between users may be coded (e.g., with color and/or styling) to indicate the source(s) of the relationship; for example, orange arrows might be used for IM friends, purple arrows for members of a common Yahoo! group, etc.

In some embodiments, any or all of these techniques can be used to generate a default list of trusted users for user A containing all of the users to whom A has some detectable relationship. User A can edit the default list, e.g., using the interfaces described above. In other embodiments, manual editing of the trust list is not supported.

Once defined, user A's trust data is stored in association with other user specific information for user A, e.g., in personalization database 166. This information can then be accessed and used to personalize or customize responses to user A's queries.

### B. Trust Networks in Query Response

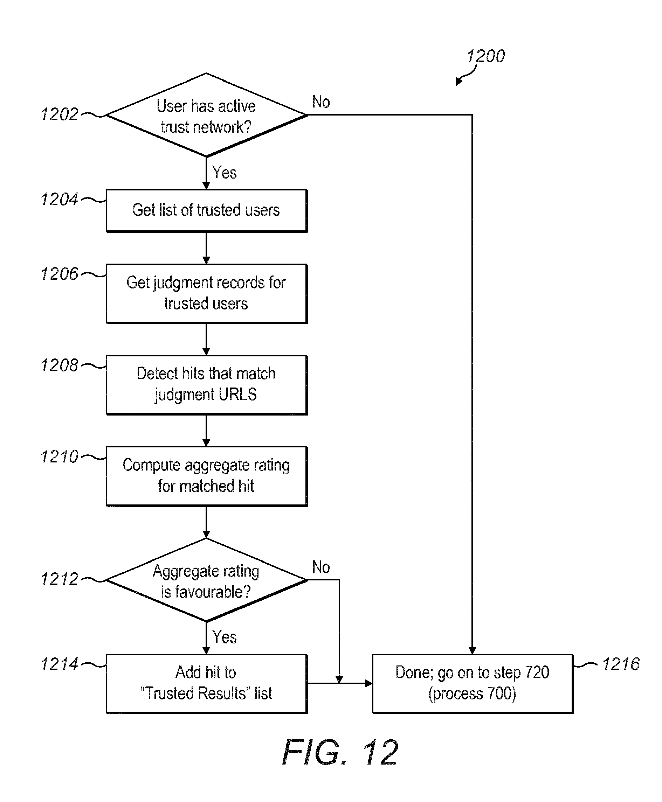

According to another embodiment of the present invention, query response module 162 accesses trust data, e.g., from personalization database 166, in order to customize a query response for a particular user. Fig. 12 is a flow diagram of a portion of a process 1200 for incorporating judgments of users in a searching user's trust network into query results for the searching user. In one embodiment, process 1200 is performed during process 700 (Fig. 7), e.g., after generation of the "My Results" list at steps 716 and 718.

At step 1202, it is determined whether the user has an active trust list (or trust network). In one embodiment, a trust list is automatically created for each user from whatever data is available about that user's associations. In other embodiments, the user manually defines a trust list. In either case, the user can elect to inactivate use of results from the trust network (e.g., using an option provided via "My Ratings" page 900 described above). If the user does not have an active trust network, process 1200 exits, proceeding to step 720 of Fig. 7. In this case, only the user's own judgments would affect the search results page.

If, at step 1202, it is determined that the user has an active trust network, then at step 1204, a list of trusted users and their trust weights is obtained. This may include all of the trust network or some subset thereof (e.g., up to a maximum degree of separation from the user). At step 1206, judgment records created by any of the trusted users are retrieved from personalization database 166. At step 1208, matches between search hits and URLs of judgment records from trusted users are detected; this step is generally similar to step 714 of process 700. At step 1210, an aggregate rating for each matched hit is computed. The aggregate rating may be, e.g., a weighted average of the rating given by each trusted user who rated the site, with weights proportional to the trust weight of each trust network member..

At step 1212, it is determined whether the aggregate rating is favorable or not, e.g., by comparing the aggregate rating to some predefined minimum favorable score. This minimum favorable score may be adjustable by the user, e.g., via "My Ratings" page 900 or "My Trust Network" page 1000. If the aggregate rating is favorable, the hit is added to a "Trusted Results" list at step 1214. Once all matched hits have been examined, process 1200 exits, proceeding to step 720 of process 700.

In this embodiment, process 700 continues with further modifications. For instance, where reranking is done at step 720, the reranking may use the searching user's ratings, the aggregate rating by the trusted users, a global score from all users, or any combination thereof. Step 722 includes ranking the "Trusted Results" list as well as the "My Results" list. In some embodiments, the "Trusted Results" and "My Results" lists may be merged into a single "Favored Results" list. In other embodiments, they may be displayed separately; for instance, in Fig. 5A, section 508 might be followed by another section (not shown) with a heading such as "Trusted Results." In still other embodiments, various clickable buttons might be provided to allow the user to select among various options for which favored result list(s) to display (e.g., buttons labeled "My Results," "Trusted Results," "All Favorable Results" might be provided, with the user able to independently activate or deactivate each).

In still other embodiments, additional information may be available. For example, in the judgment data format described above, users are able to enter a free text description or annotations for a page. An aggregate annotation may be compiled and displayed with the result. The aggregate may simply be the union of all annotations, the union of annotations by a selected subset of the users (e.g., the *N* most trusted users for some integer N) or a summary version of the annotations; a summary may be based on frequency of occurrence, structured text properties, or the like. The user may also be able to click a link to view annotations, e.g., in a pop-up window or in-line with the results.

In some embodiments, user A does not receive information as to which members of A's trust network rated a particular page or site or what rating a particular member gave. In other embodiments, user A may be able to obtain such information. For example, instead of or in addition to the aggregate rating, individual ratings by each trust network member might be displayed. A separate "Favored Results" list for each trust network member might also be provided. Various buttons or other controls can be included in the search results page to turn such features on or off, select which trust network members' results to display, etc.

In some embodiments, user A can evaluate the judgments of various members of the trust network. For example, user A may be able to indicate agreement or disagreement with the aggregate rating of a page or site, or with an individual user's rating. In some embodiments, such feedback can be used to determine a global "reputation" for various users, either directly or indirectly. In one such embodiment, each member R of the trust network has a reputation, which might be derived from an aggregation (e.g., average) of trust weights assigned to that member R by other members of the trust network. Feedback from other users as to their agreement or disagreement with R's ratings can be used directly to adjust R's reputation up or down as appropriate. In other embodiments, agreement or disagreement can be used to automatically adjust trust weights for various trust network relationships, and to the extent that R's reputation depends on the trust weights, such adjustments will indirectly affect R's reputation. One such embodiment is described in above-referenced Application No. 10/942,335.

### C. Member Restriction on Information Sharing

In the embodiments described above, user A has exclusive control over the membership of A's trust network. For example, user B cannot opt into or opt out of A's trust network, and user B might not be able to determine whether B is a member of A's trust network. In some embodiments, user B may be given options in this regard. In other embodiments, regardless of whether B has such options, user B is able to control how much of B's judgment data is shared with user A.

In one embodiment, user B may control sharing of B's judgment data through the use of folders. As described above, any user can organize his or her judgment data into different folders, e.g., via "My Results" page 900. In embodiments of the present invention, the folder data described above may be augmented by two additional fields: privacy level and access list.

The privacy level may be set to one of "Public," "Shared," or "Private." If a folder is marked "Public," the judgments therein are made visible to all users of the system. If a folder is marked "Shared," the judgments therein are only visible to members of the owning user's trust network. If a folder is marked "Private," the judgments are only visible to users on the folder's access list. Judgments are always visible to their author, regardless of privacy level.

The access list is a listing of users (or in some embodiments groups of users) specifically authorized to view the folder if it is marked "Private." The access list for any folder not marked "Private" is ignored. In some embodiments, the user may be able to define a default access list to be applied when a folder is marked "Private," then modify that list on a per-folder basis.

To illustrate the use of folder privacy settings, reference is made to Fig. 13, where listing 1302 shows folders (Main and F1-F4) that might be defined by user B and judgments (J1-J10) that might be contained therein, listing 1304 shows the members of B's trust network, and listing 1306 shows the members of user A's trust network. Suppose that user A enters a query that is processed in accordance with processes 700 and 1200 described above. At step 1206, it would be determined that user B is a member of user A's trust network. Then B's folder tree (see listing 1302) would be traversed to obtain B's judgment data. Folder Main is marked Public; therefore, judgments J1-J3 are visible to A and would be extracted for use in responding to A's query. Folder F1 is marked Private with no access granted to A; therefore, judgments J4 and J5 are not visible to A and would not be extracted. Folder F2 is also marked Private, but access is granted to A; therefore, judgment J6 is visible to A and would be extracted. Folder F3 is marked Public; judgments J7 and J8 would be extracted. Folder F4 is marked Shared, but it is not visible to A because A is not in B's trust network; accordingly, judgments J9 and J10 are not visible to A and would not be extracted. Thus, at step 1206, the visible judgments J1-J3 and J6-J8 would be obtained and used in responding to A's query, while the invisible judgments J4, J5, J9, and J10 would not. From the perspective of user A, it is as if the invisible judgments do not exist, and the aggregate trust network rating for any hits that B might have rated using invisible judgments would be computed at step 1210 as if user B had not rated the site.

It will be appreciated that other privacy mechanisms might be provided in addition to or instead of those described herein. More or fewer privacy levels might be defined, and access to "Shared" folders can be determined with reference to data other than the author's trust network, e.g., the author's IM friends list, e-mail address book, members of a Yahoo! group or other voluntary association selected by the author, users in the social network within a selected number of degrees of separation from the author, etc. Some embodiments may also allow authors of judgments to set privacy levels for their judgments on a per-judgment basis.

Privacy information in some embodiments is used to determine whether to include a particular user's rating in the global score mentioned above (e.g., only judgments in "Public" folders might be considered); in other embodiments, global scores might be computed for all judgments without reference to privacy settings.

### D. Temporary Relationships

In the embodiment described above, users have the option of establishing a persistent trust relationship as described above, in which one user's judgment data is used in real time for responding to another user's queries. In another embodiment, users may have the option of establishing a temporary relationship allowing one user to import a "snapshot" of another user's judgments without creating a persistent relationship between the two.

For example, a user interface to judgment data (e.g., "My Ratings" page 900 of Fig. 9) might also include a button allowing a user to import another user's judgment data. Upon selecting this button, the importing user would be prompted to enter a user identifier of an "exporting" user whose judgments are to be imported. The system would create a copy of the exporting user's judgment data in the personalization database record for the importing user. Because the data is copied, any subsequent modifications to the data by the exporting user would not be propagated to the importing user.

Where judgment data for a user is organized into folders, imported judgment data can be added to any folder. For example, the data may be added to the user's main folder, to any folder designated by the importing user, or to a new folder (e.g., titled "target user's judgments").

In some embodiments, the exporting user may exercise control over exportation of his or her judgment data. For example, the privacy settings described above might be used, with "Public" folders being importable by any user, "Shared" folders being importable only to users who are members of the exporting user's trust network, and "Private" folders being importable only by users on the folder's access list. Alternatively, a separate "Export" privacy setting might be provided. Depending on implementation, this setting may be controlled on global, per-folder, or per-judgment basis.

### E. Suggesting Communities

In some embodiments, the search provider may analyze patterns in user A's judgment data and, based on those patterns, recommend various communities for user A to join. For example, the search provider might select an interest-based community G (e.g., a Yahoo! group) and determine aggregate (e.g., average) ratings that members of community G have given to some number of pages or sites. User A's ratings can then be compared to the aggregate rating for community G, using some measure such as a standard deviation or correlation coefficient to determine a degree of similarity. As another example, if a log of queries per user is maintained, patterns of user A's queries might also be compared to patterns of queries entered by members of group G to determine whether user A and members of community G have similar interests and tastes. Combinations of judgment patterns and query patterns might also be used. If the degree of similarity is high enough, the provider issues a suggestion that user A should join community G.

In one embodiment, user A has the option to receive such suggestions or not. For example, user A might be able to opt in or opt out of receiving suggestions for communities to join via a user profile page. If a user opts out, then suggestions are not generated for that user.

While the system could automatically add user A to a suggested community, in preferred embodiments, user A controls the final decision on whether to join a suggested community. For instance, the suggestion might be sent in an e-mail message that can include a link that user A can follow to obtain more information about the community or to join it, contact information (e.g., e-mail address or IM screen name) for a current member of the community, or the like. Thus, user A can decide how and whether to follow up on any suggestions received.

In some embodiments, user A may receive suggestions to join any community that can be joined voluntarily (e.g., a Yahoo! group or other common-interest community). In other embodiments, existing members of the community may decide whether or not to participate in a suggestion-based referral program. For example, online common-interest communities typically have an "owner," a member of the community who has been designated as a point of contact for the provider of the online-community service and who has authority to set various operating rules or preferences for the community (e.g., whether an e-mail list associated with the community is moderated or not, whether new members have to be approved, etc.). Where the service provider offers a suggestion service, the owner of each community may indicate whether that community wants to participate or not. The service provider abides by whichever decision is expressed by the owner.

### F. Searching Community-Approved Content

As described above and in above-referenced Provisional Application No. 60/614,232, some embodiments of the present invention allow users to search their own "library" of favorably rated pages or sites. In the present invention, a user can search within a library of pages or sites that have been approved by a user-selected community.

A community is an aggregation of individual users and as such does not directly rate any page or site. The criteria for identifying a page or site as being approved by the community are advantageously based on the ratings given by individual members of the community, and the criteria can be varied. In one embodiment, a page or site is approved if at least one member of the community has given it a favorable rating. In another embodiment, approval requires a favorable rating from a minimum fraction of the members of the community (or of the members who are active in rating sites). In yet another embodiment, approval is based on an aggregate rating among all members of the community who have rated the page or site. Each member's rating may be given equal weight. Alternatively, the weight given to each rater's score may be determined by the total trust weight assigned to that rater by other members of the group, the rater's global reputation, or some other scheme.

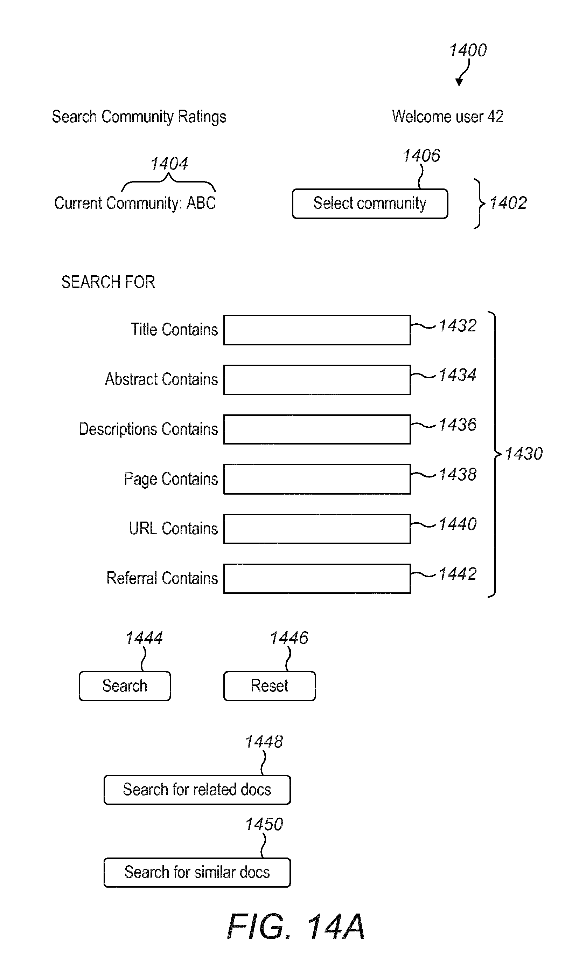

Fig. 14A illustrates an interface page 1400 for searching sites rated by community members according to an embodiment of the present invention. A user may access page 1400, e.g., by using a "More options" button 927 on page 900 described above.

Section 1402 enables the user to control which community (or, in some embodiments multiple communities) are to be searched. At 1404, the current active community is listed, and button 1406 may be activated to select a different active community.

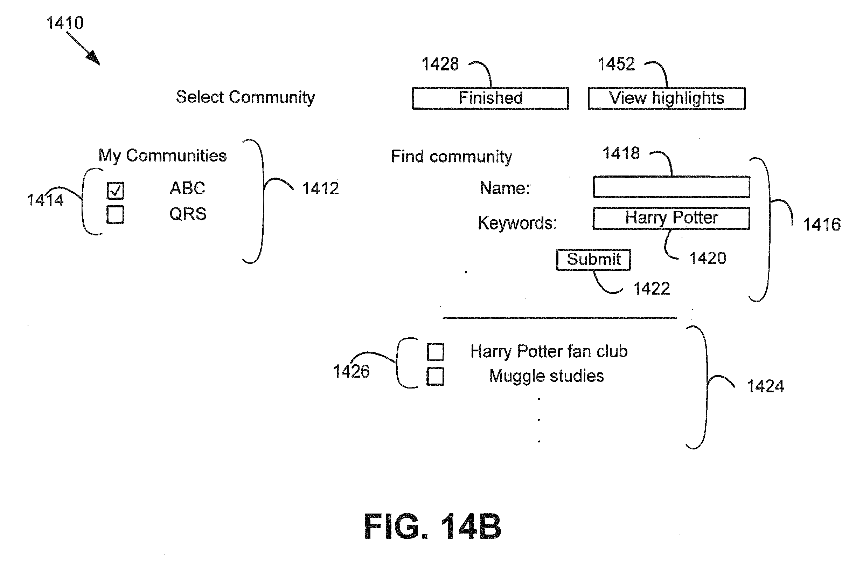

Fig. 14B illustrates a community selection page 1410 according to an embodiment of the present invention. Page 1410 may be displayed when the user activates button 1406. At the left, a list 1412 of communities to which the user belongs ("ABC" and "QRS" are used herein as generic examples) is presented. Each community has a checkbox 1414 that the user can check to select the community and uncheck to deselect that community. In this embodiment, the user can select multiple communities; in other embodiments, the user may be limited to selecting only one community at a time.

At the right is a search interface 1416 that enables the user to find and select communities of which she is not a member. The user can search for a community by name using box 1418 and/or by keywords using box 1420. The search is executed when the user presses submit button 1422. The search in this case is advantageously executed on a directory of communities (e.g., the Yahoo! Groups directory) maintained by the service provider. Results, in this case the names and optionally brief descriptions of groups that match the query, are displayed inline in area 1424. The number of communities listed may be limited, e.g., to a "top ten" (or some other number), and communities may be selected for listing based on various criteria. In preferred embodiments, the criteria relate to the likelihood that the community will provide a useful library of favorably rated content. For instance, communities could be selected based on the number of members, the aggregate number of pages or sites that have been rated by the members, the amount of activity on the community's message board or chat room, and so on.

The user can select one or more of the listed communities using check boxes 1426. In preferred embodiments, checking a box 1426 does not result in the user joining the community or provide the user with access to any information about individual members. The only effect is that the user's search is limited to sites that have received a favorable rating from the selected community, and the user will be able to view aggregate ratings and comments from that community.

A user may find this feature helpful, for instance, if she is exploring a topic that she does not know well. Thus, by way of example, suppose that a user who is not already familiar with the "Harry Potter" books is interested in searching for information about them. Searching the Web with the query "Harry Potter" would return thousands of hits, but the user may not be able to tell which of those thousands of sites are worth visiting. By restricting the search to sites that have been rated favorably by members of a community of Harry Potter fans, the user can leverage the fans' knowledge and opinions to quickly find sites whose content is likely to be reliable and useful.

When the user has finished selecting the community (or communities) to be used for the search, she activates the "Finished" button 1428 to return to page 1400 (Fig. 14A).

At page 1400, the user enters a query in query section 1430. Query section 1430 provides various boxes where the user can enter keywords specific to particular fields in the user judgment record. In this example, the user can specify keywords for the title (box 1432), abstract (box 1434), description (box 1436), full text of the page (box 1438), URL (box 1440), and Referral (box 1442) fields of the judgment record. It is to be understood that the user is not required to enter keywords for all fields; any fields with no keywords are not used to constrain the search. "Search" button 1444 submits the query for processing, and "Reset" button 1446 clears all fields in query section 1430. Where the full text is to be searched, data can be obtained either from the judgment record (if the full text is stored) or from page index 170.

In some embodiments, users can also search for other documents (e.g., pages or sites) that are similar to or related to pages or sites that have been rated by a particular community. "Similar" documents are documents that contain content meeting some similarity criterion relative to a rated page, e.g., having some number of keywords in common, having similar patterns of keyword occurrence, belonging to the same or closely related categories, or the like. Algorithms for determining similarity between two pages are known in the art and may be used with the present invention. "Related" documents share portions of a URL (e.g., all or part of a domain name) with the rated page; again, known algorithms for determining relatedness may be used.

From search page 1400, the user can select one or more communities using button 1406 and page 1410 (Fig. 14B) as described above, then activate button 1448 to search for similar documents or button 1450 to search for related documents, as determined relative to documents rated by the selected community or communities. Searches for similar or related documents are advantageously not limited to rated pages or sites. In some embodiments, searches for related or similar pages can also include keyword qualifiers, and keywords may be specified using query section 1430 as described above.

It will be appreciated that search pages 1400 and 1410 are illustrative and that variations and modifications are possible. In some embodiments, search page 1400 may also be accessible via a button on a toolbar or other suitable element of a persistent user interface, or from a search provider's main page. If a user who is not identified attempts to access page 1400, the user may be prompted to sign in before page 1400 is displayed.

### G. Viewing Community Information

In some embodiments, the user may also be able to view information about community opinion of various pages or sites without executing a search. For example, community selection page 1410 of Fig. 14B may include a "View Highlights" button 1452. Selecting a community and activating this button opens a "highlights" page that may contain various information about the community's Web site preferences and patterns, e.g., in the form of various lists of community-approved content. As described above, community approval is advantageously defined by reference to individual members' ratings of various pages or sites, and different criteria can be applied as desired.

A variety of lists can be made and displayed on a "highlights" page, depending on what information is available. For instance, a list of the sites (e.g., five or ten) with the highest aggregate rating within the community can be provided. Another list might identify most recently rated sites, along with the rating. This list might include all ratings or only favorable ratings. Still another list might identify the sites most frequently visited by community members. Any of these or other lists may also include annotations, summaries of the annotations, or, if structured annotations are used, selected fields or values from the annotations.

In another embodiment, the user can provide a query for the highlights page, and the results can be shaped based on the query. For example, a list of rated sites for which the user's query (or a keyword from the user's query) matches the Referral field in the judgment records for at least one member might be shown. Other variations, additions and modifications are also possible.

In the interest of protecting privacy it may be desirable to ensure that the user visiting a "highlights" page or otherwise using community ratings data does not thereby gain information about individual users' opinions; rather, the various community-information pages can present an aggregate view of community opinion without identifying individual members of the community or indicating which members contributed to a particular opinion.

In some embodiments, when community ratings or judgments are formed, the privacy settings established by each member are advantageously respected; for example, judgments marked as "Private" might be ignored, while "Public" or "Shared" judgments might be used.

### IV. Further Embodiments

While the invention has been described with respect to specific embodiments, one skilled in the art will recognize that numerous modifications are possible. For instance, the appearance of search result and user interface pages may differ from the examples shown herein. Interface elements are not limited to buttons or clickable regions of a page; any interface implementation may be used. Steps in the various processes described herein may be combined, modified or varied; order of steps may be varied; and steps described as sequential may be executed in parallel or vice versa. All queries and site listings used herein are illustrative, and ratings are applied for purposes of illustration only and are not meant to imply any opinion, endorsement, or disparagement of any actual Web page or site.

It should be understood that the invention is also not limited to any particular rating scheme, and some embodiments might offer users the option of choosing among alternative rating schemes (e.g., thumbs up/thumbs down or rating on a scale). A "judgment" as used herein may include any information reflecting a user's favorable or unfavorable opinion of a page or site, not limited to ratings or to any particular rating scheme. In addition, judgments that do not necessarily reflect approval or disapproval may also be collected and used in responding to queries. For example, an interface may be provided on the search page or elsewhere allowing the user to label a page or site as belonging to some general category of content, e.g., "adult" or "foreign" or "spam." Such labels may be displayed in hit lists together with the link to the page or site, and a user may elect to filter search results based on these labels (e.g., the user may be able to request "don't show foreign sites" or "show only foreign sites," etc.) Judgments in various forms can be collected as explicit inputs from the user via a user interface, which may be integrated into a search results page as described above, provided by a separate window or toolbar, or the like. In some embodiments, only favorable judgments might be supported, and all judgments might be given the same rating; thus, the user's rating options might be to "save," or "bookmark," the page or site (in effect, giving a favorable rating to the page or site) or to do nothing.

As described above, some embodiments allow the user to elect whether to rate a particular link at the page level or the hostname level. Other embodiments may provide ratings at additional intermediate levels. For example, some hostnames are shared by a number of independent Web sites, and a user may have very different opinions of different ones of these sites. Where intermediate levels of rating granularity are provided, a user might be able to assign one judgment to all pages whose URLs start with "http://www.domain.tld/site1/" and a different judgment (or no judgment) to all pages whose URLs start with "http://www.domain.tld/site2/." Other degrees of granularity may also be supported if desired. In some embodiments, a user interface for editing a URL may be provided when a page or site is being ranked, allowing the user to specify the portion of the URL that is to be considered in detecting a match. In other embodiments, the user's likely judgment of other pages with similar URLs or similar content (e.g., inferred from titles, abstracts, patterns of word use in the content, categorization, etc.) might be inferred from a judgment given to a single page. In addition, in some embodiments, users might also be able to assign judgments to all pages registered to the same domain name registrant as the rated page; the existence of a common domain name registrant may be determined using WHOIS or other similar service. (Applying a judgment of one page or site to other commonly owned pages or sites might be particularly useful in the case of unfavorable ratings.)

In still other embodiments, a user's judgment of one page may be used to infer judgments that the user would likely give to other pages with similar content. For example, some page indexing algorithms assign categories or contexts to pages, e.g., based on frequently occurring keywords in the page. A judgment of one page or site in a given category may suggest that the user is or is not interested in that category of content; consistent judgments of several such pages or sites can be used to strengthen the inference.

Where inferred judgments are used to rank search hits, such judgments may be accorded less weight than direct judgments, reflecting uncertainty about the inference. For example, if a user gave a negative rating to site X, a similar rating might be inferred for another site Y that is related to site X (e.g., by either URL or category). The direct negative rating might cause site X to be removed from the search result list, while the inferred negative rating of site Y might result in site Y being included in the result list but with a lower ranking than it otherwise would have.

In other embodiments, a search provider may also include sponsored links, in which content providers pay to have links to their sites provided in search results, e.g., in a special designated area of the results page. One embodiment of the present invention applies user ratings to any sponsored links as well as to other search hits. For instance; a sponsored link might appear with additional highlighting to indicate the user's and/or trust network's favorable or unfavorable judgment of that page or site. User ratings for sponsored links might also be shown.

In some embodiments, a user may be able to define multiple trust networks, e.g., for searches in different categories. In one such embodiment, the user might define one trust network for general searches, another trust network for searches within a "Shopping" property, yet another trust network for searches within a "News" property, and so on.

In some embodiments, users might also be able to define trust networks for applications other than search. For example, many e-mail account providers include various spam filters, as well as giving a user the option to designate an incoming message as spam (e.g., so that operation of the spam filter can be reviewed and improved upon). Suppose that user A has defined a trust network for email and that this trust network includes user B. Suppose further that user B designates a particular message as spam and that user A subsequently receives the same (or very similar) message. User A might receive some indication that someone in A's e-mail trust network (who might or might not be identified as B) thinks this message is spam, or the message might be redirected to A's "Junk" e-mail folder or some other action taken to alert A to an increased likelihood that the message is spam.

The embodiments described herein may make reference to web sites, links, and other terminology specific to instances where the World Wide Web (or a subset thereof) serves as the search corpus. It should be understood that the systems and processes described herein can be adapted for use with a different search corpus (such as an electronic database or document repository) and that results may include content as well as links or references to locations where content may be found.

Thus, although the invention has been described with respect to specific embodiments, it will be appreciated that the invention is intended to cover all modifications and equivalents within the scope of the following claims.

Various examples are set out in the following numbered paragraphs (NPs):
NP 1. A method for responding to a user query, the method comprising:
   receiving a query from a first user;
   generating a list of hits related to the query;
   modifying the list of hits based in part on a first user judgment for a first one of the hits, the first user judgment previously provided by the first user, and based in part on a second user judgment for a second one of the hits, the second user judgment previously provided by a second user who is a member of a trust network for the first user; and
   transmitting the modified list of hits to the user.
NP 2. The method of NP 1, wherein the trust network is defined by the user with reference to a social network.
NP 3. The method of NP 1, wherein the trust network is defined by the user and associated with a particular one of a set of areas to be searched.
NP 4. The method of NP 3, wherein the areas to be searched include a shopping area, a news area, and a travel area.
NP 5. A method for responding to a user query, the method comprising:
   presenting social network data to a first user; the social network data including a number of other users and relationships there between;
   receiving from the first user a selection of one or more of the other users for inclusion in a trust network;
   receiving a query from the first user; and
   responding to the query;
   wherein responding to the query includes modifying a search result for the query based at least in part on a user judgment previously defined by one of the other users in the trust network.
NP 6. The method of NP 5, wherein modifying the search results includes:
   computing an aggregate rating for each search hit based on the user judgments previously entered by each of the other users in the trust network; and
   arranging the search hits in an order based at least in part on the aggregate ratings.
NP 7. The method of NP 6, wherein the aggregate rating comprises a weighted average of individual ratings by different ones of the other users in the trust network.
NP 8. The method of NP 7, wherein each of the different ones of the users is assigned a weight by the first user and wherein the weight is used in computing the weighted average of individual ratings.
NP 9. The method of NP 5, wherein presenting the social network data includes presenting the social network data in a graph and enabling the user to select one of the other users by interacting with the graph.

## Claims

1. A method implemented on a machine having at least one processor, storage, and a communication platform connected to a network for responding to a request, the method comprising:
receiving a request from a user;
obtaining a search result based on the request;
identifying one or more other users based at least in part on respective degrees of separation between the user and each of the one or more other users;
determining content in the search result which at least one of the one or more other users has previously accessed;
incorporating, in the search result, information about the previous access by the at least one of the one or more other users; and
transmitting the search result with incorporated information to the user as a response to the request.

2. The method of claim 1, wherein each of the one or more other users is a member of a social network associated with the user.

3. The method of claim 2, wherein:
the social network includes a plurality of members including the user;
at least one of the plurality of members is identified as a friend of the user; and
at least one of the plurality of members is identified as a friend of a member other than the user.

4. The method of claim 1, wherein each of the one or more other users is connected to the user with a degree of separation not exceeding a predetermined value.

5. The method of claim 1, wherein the at least one of the one or more other users has created an annotation associated with the determined content.

6. The method of claim 5, wherein the annotation comprises information about at least one of: a rating of the determined content, a keyword describing the determined content, a label selected from a predetermined vocabulary, and a description of the determined content.

7. The method of claim 6, wherein the search result is arranged based at least in part on an average rating of the determined content from the at least one of the one or more other users.

8. The method of claim 3, wherein:
the friend of the user is assigned a trust weight based on an input from the user; and
the friend of the user is added as a member of the social network based at least in part on the trust weight.

9. The method of claim 3, wherein the friend of the user is automatically identified from a list of users with whom the user has communicated.

10. The method of claim 1, wherein the search result includes a visual highlight element applied to the determined content.

11. The method of claim 2, wherein:
the search result is generated based on one or more topics related to one or more documents; and
each of the one or more documents has previously been accessed by at least one member of the social network.

12. An apparatus arranged to carry out a method according to any one of the preceding claims.

13. A computer program which, when executed by a processor, causes the processor to carry out a method according to any one of claims 1 to 11.
